(19) Europäisches Patentamt
European Patent Office
Office européen des brevets

(11) **EP 4 765 045 A1**

(12) **EUROPEAN PATENT APPLICATION**

(43) Date of publication:
**24.06.2026 Bulletin 2026/26**

(21) Application number: **24307217.0**

(22) Date of filing: **20.12.2024**

(51) International Patent Classification (IPC):
*G06V 20/13* (2022.01)   *G06V 20/17* (2022.01)
*G06V 20/10* (2022.01)

(52) Cooperative Patent Classification (CPC):
**G06V 20/13; G06V 20/17; G06V 20/176;**
**G06V 20/188; G06V 20/194**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **ATOS France**
**95870 Bezons (FR)**

(72) Inventors:
• **HAINZL, Thomas**
**4030 Linz (AT)**
• **ANDREU, Marcel**
**1220 Vienna (AT)**
• **LORENZ, Melina**
**1020 Vienna (AT)**

(74) Representative: **Novagraaf Technologies**
**2 rue Sarah Bernhardt**
**CS90017**
**92665 Asnières-sur-Seine Cedex (FR)**

(54) **COMPUTER IMPLEMENTED METHOD AND SYSTEM FOR DETERMINING AN ENVIRONMENTAL CONDITION SCORE OF A GEOGRAPHICAL AREA**

(57)     A computer implemented method of determining an environmental condition score of a geographical area, comprising:
- obtaining (S1) image data (SID) of said geographical area, from satellite imagery (SAT) during for a given time period,
- forming (S2) a cell grid across said image data of the geographical area, said cell grid comprising a plurality of cells (H);
- processing (S3) the plurality of cells (H), comprising, for one cell of said plurality of cells:
- determining (S32) a value of a vegetation condition sub-score ($VEG_H$) for said cell;
- determining (S33) a value of an infrastructure condition sub-score ($INF_H$) for said cell; and
- deriving (S35) a value of the environmental condition score ($ENV_H$) for said cell at said time period from at least the vegetation condition sub-score and the infrastructure condition sub-score, and

- providing (S4) the values of at least the environmental condition score ($ENV_H$) for the plurality of cells corresponding to the given time period to a user through a human-machine interface.

REC. SID ~ S1

FORM CGD ~ S2

SEL. H ~ S31

DET. $VEG_H$ ~ S32

DET. $INF_H$ ~ S33

DET. $NBR_H$ ~ S34

~ S3

DET. $ENV_H$ ~ S35

PRV GRP ~ S4

**FIG. 2**

**Description**

TECHNICAL FIELD

The present disclosure relates to a computer implemented method and system for determining an environment condition score of a geographical area.

BACKGROUND

Remote sensing of the Earth, from satellites, is commonly used to monitor human activity, in various fields such as agriculture, military surveillance, marine navigation and ecosystem and climate studies for instance to track wildlife or to anticipate environmental events such as natural disasters.

Indeed, satellite imagery encompasses a range of frequency bands across the electromagnetic spectrum, allowing diverse applications based on the interaction of light with Earth's surface. For instance, the visible band (Blue (450-500 nm), Green (500-570 nm), Red (620-700 nm)) and the Near-Infrared (NIR) band (700-1,100 nm) are useful for vegetation monitoring and land use mapping. The Shortwave Infrared (SWIR) (1,100-3,000 nm) is suited for moisture detection, geology, and snow/cloud differentiation. The Thermal Infrared (TIR) band (8,000-14,000 nm) allows to measure surface temperature and thermal properties and may be applied in urban heat or energy efficiency studies or monitoring volcanic activity.

Satellite images may for instance be used, as described in the document entitled "Identification of temporary livestock enclosures in Kenya from multi-temporal PlanetScope Imagery", by Vrieling et al., published by Elsevier, in 2022, on the website "https//do.org/10.1016/j.rse.2022.113110, to detect, locate and monitor temporary livestock enclosures (bomas) in Kenya. These bomas are indeed known hotspots for emissions of nitrous oxide ($N_2O$), an important greenhouse gas.

However, there is still a need for identifying all kind of artificialized zones of an ecosystem and quantifying over time their overall impact on the environment.

The present invention improves the situation.

SUMMARY

The present disclosure concerns a computer implemented method of determining an environmental condition score of a geographical area including the following steps, performed by a computer system:

- obtaining image data of said geographical area, from satellite imagery for at least one time period,

- forming a cell grid across said image data of the geographical area, said cell grid comprising a plurality of cells;

- processing the plurality of cells, comprising for one cell of said plurality:

  - determining a value of a vegetation condition sub-score for said cell;

  - determining a value of an infrastructure condition sub-score for said cell; and

  - deriving a value of the environmental condition score for said cell at said time period from at least the vegetation condition sub-score and the infrastructure condition sub-score, and

- providing the values of at least the environmental condition score for the plurality of cells corresponding to the given time period to a user through a human-machine interface of the computer system.

Thanks to the present method, a quantified overall indicator of an environmental condition of a geographical area by human activity is assessed from satellite imagery and provided to the user. It both takes into account an indicator of the vegetation condition and the human-made infrastructure present in each cell of the geographical area This indicator thus reflects an artificialization rate of the geographical area and the impact of human activity on this environment at the given time period

In an embodiment, the given time period is a month. In an embodiment, the cell grid is an hexagon grid, but a quad or diamond shape grid may also be applied. In an embodiment, this overall environment indicator may be determined for successive time periods, so as to allow the user to follow its dynamic evolution.

According to an embodiment, the step of determining an infrastructure condition sub-score includes the steps of:

- detecting one or more objects belonging to one or more given object classes in the cell based on spectrometric, RGB, data of a visible frequency band from pixel values of the cell and by using a trained machine learning model, and determining, for a detected object an object class among one or more given object classes and a confidence score associated with the detected object, and

- determining an object class score per object class, at least from the object classes of the detected objects and their confidence score, and

- deriving a value of the infrastructure condition sub-score for the cell by combining the object class scores of the one or more object classes.

The ML model has been trained to detect objects a limited number of classes of interest for the geographical areas, which allows quicker training and improved accuracy. For instance, when the geographic area corresponds to a National Park in Kenya, the selected object classes are livestock enclosures called bomas, buildings and fence. The infrastructure condition sub-score is configured to take values in the range [0:1]. It is noteworthy that the proposed method is not limited to this geographic area but may apply to any other region of the world. For instance, when the geographical area is a rainforest, object classes may clearings, streets and buildings.

According to an embodiment, the determination of the object class score for the cell is also based on a count of detected objects associated with an object class. An advantage is to add a quantity of detected objects in the calculation of the object class score.

According to an embodiment, the object class score is determined based on the following formula: $x= Min\{1, \mu.\ln(1 + n)\}$, wherein x is the object class score, n the count of detected objects associated with the object class, $\mu$ an average confidence score for the detected objects associated with the object class and ln the natural logarithm function. An advantage is to get a representative result in a simple way.

In an embodiment, different weights may be applied to the different object class score to prioritize one or more classes with respect to the others. Their values may be fixed by experts.

In an embodiment, the step of determining a value of a vegetation condition sub-score includes:

- determining a measured value of a metric for quantifying health and density of vegetation from spectrometric data of a red frequency band and a near infrared frequency band of pixel values included in the cell,

- determining a vegetation outlier sub-score by comparing the measured value with an expected value of the metric calculated from the measured value and historical values of the metric associated with previous time periods, and

wherein the vegetation condition sub-score is derived from the vegetation outlier sub-score.

Such a vegetation outlier score informs about an unexpected deviation of the vegetation sub-score with respect to historical values. It definitely contributes to incorporate a dynamic dimension into the overall environmental condition score.

According to an embodiment, determining a measured value of a metric for quantifying health and density of vegetation comprises determining a measured value of said metric per pixel included in the cell and calculating an average measured value of said metric over the pixels included in the cell and determining an expected value of said metric from said mean values and historical mean values.

In an embodiment, the processing of the plurality of cells further comprises:

- determining a value of a fire damage condition sub-score for said cell, comprising:

- determining a measured value of a metric for quantifying fire damages per pixel of the cell, as a ratio of spectrometric data of a near infrared frequency band and a short-wave infrared frequency band from the pixel values included in the cell,

- determining a fire damage outlier sub-score by comparing the measured value ($NBR_P$) with an expected value of the metric for the cell calculated from the measured value and historical values of the metric associated with previous time periods,

wherein the fire damage condition sub-score is derived from the fire damage outlier sub-score, and wherein the value of the overall environmental condition score for said cell is derived from the vegetation condition sub-score, the infrastructure condition sub-score, and the fire damage condition sub-score.

This allows considering the positive or negative impact of fire on environmental condition of the geographical area. Proper management and understanding of fire's ecological role are critical for sustaining certain environments. In this regard, fire management policies may vary with countries. For instance, in some ecosystems like savannah, fire is naturally used by people for clearing out old, dry vegetation, allowing new, nutrient-rich grasses to grow, which benefits herbivores, preventing the encroachment of shrubs and trees, maintaining the grassland characteristic of savannas for nutrient recycling as fire is expected to release nutrients back into the soil, enriching it for plant growth. However, while fire is essential for maintaining savanna ecosystems, improper or uncontrolled use can lead to loss of Biodiversity, as over-frequent fires can harm certain plant and animal species, increase greenhouse gas emissions and provoke land degradation by soil erosion and desertification.

In an embodiment, determining the environmental condition score for the cell comprises applying a softmax function to at least the determined vegetation condition and infrastructure condition sub-scores. This allows to convert raw scores into probabilities, making it easier to interpret the output.

In an embodiment, determining the environmental condition score further comprises applying different weights to at least the vegetation and infrastructure condition sub-scores. This weighting may reflect a prioritization of the sub-scores. It is for instance provided by an expert. For example, if wildlife movement is considered as a priority, then objects that would hinder such movement could be weighted heavier than objects that would not. For example, a herd of animals is probably more restricted by fields (and especially fences, which is why this object class is very important for some experts) than by buildings and bomas. In this case, a weighting of 50% fields, 25% bomas and 25% buildings could be useful.

In an embodiment, the machine learning model is trained using a training database comprising a plurality of image data of the geographical area associated with labels, the labels of one of said image data including, for one cell the plurality of cells, an index of the cell, human-made segmentations of the objects to be detected in the cell and their associated object class.

In an embodiment, the labels of one of said plurality of pictures is cross-checked against higher resolution images of the geographic area. This helps getting more precise human-made segmentation of the objects present in the cells of the grid cell mapped across the geographical area, that will be used as labels for training the ML model.

According to a second aspect of the disclosure, a computer system for determining an environmental condition score of a geographical area comprises a computer device configured to:

- obtain image data of said geographical area, from satellite imagery for at least one time period,

- form a cell grid across said image data of the geographical area, said cell grid comprising a plurality of cells;

- process the plurality of cells, comprising for one cell of said plurality:

    - determining a value of a vegetation condition sub-score for said cell;

    - determining a value of an infrastructure condition sub-score for said cell; and

    - deriving a value of the environmental condition score for said cell at said time period from at least the vegetation condition sub-score and the infrastructure condition sub-score, and

comprises a human-machine interface configured to provide the values of at least the environmental condition score for the plurality of cells corresponding to the given time period to a user.

In an embodiment, the computer system implements the method according to the first aspect, according to any of the aforementioned embodiments.

In an embodiment, the computer device further comprises a memory configured to store a machine learning model trained to detect objects belonging to one or more given object classes in the cells of the image data and, and determining a value of an infrastructure condition sub-score for said cell includes:

- detecting one or more objects belonging to one or more given object classes in the cell based on spectrometric, RGB, data of a visible frequency band from pixels include in the cell and by using a trained machine learning model, MLM, and determining, for a detected object an object class among one or more given object classes and a confidence score associated with the detected object, and

- determining an object class score per object class, at least from the object classes of the detected objects and their confidence score, and

- deriving a value of the infrastructure condition sub-score for the cell by combining the object class scores of the one or more object classes.

In an embodiment, the computer system further comprises a user device comprising the human-machine interface and configured to receive the values of the environmental condition score through a communication network and to provide a representation of said environmental condition score to the user.

In an embodiment, the computer system further comprises at least one processor; and at least one memory including computer program code, the at least one memory and computer program code configured to, with the at least one processor, cause the processor to carry out the steps of the method according to the first aspect.

According to a third aspect, a computer program comprises program instructions stored thereon for causing a processor to perform a method according to the first aspect.

According to a fourth aspect, a non-transitory computer-readable medium comprises program instructions stored thereon for causing a computer to perform a method according the first aspect.

BRIEF DESCRIPTION OF THE DRAWINGS

Other features, purposes and advantages of the disclosure will become more explicit by means of reading the detailed statement of the non-restrictive embodiments made with reference to the accompanying drawings.

Figure 1 shows, according to an embodiment, an architecture of a system for determining an environmental condition score of a geographical area.

Figure 2 is a flowchart of a method of determining an environmental condition score of a geographical area according to an embodiment.

Figure 3 is an exemplary hexagonal grid formed across a picture of a geographical area from satellite imagery.

Figure 4 details a step of determining an infrastructure condition sub-score according to an embodiment.

Figure 5 details a step of determining a vegetation condition sub-score according to an embodiment.

Figures 6A to 6C show exemplary hexagon grids mapped across different geographical areas in Kenya having different classes of objects.

Figure 7 shows an example of tool interface for humanmade segmentation of objects in an image of a geographical area.

Figures 8A and 8B respectively a low resolution and higher resolution images of a same geographic area.

Figures 9A to 9C show exemplary images of the geographical area, having different classes of objects and used for comparing different techniques of determining an infrastructure sub-score according to an embodiment.

Figure shows an exemplary graphical representation of environment condition score values determined for the plurality of hexagon cells of a geographical area, provided to a user according to an embodiment.

Figure 11 shows, according to an embodiment, a hardware structure of a system for determining an environmental condition score of a geographical area.

DETAILED DESCRIPTION

The specific structural and functional details described herein are non-limiting examples. The example embodiments described herein are subject to various modifications and alternative forms. The subject matter of the disclosure may be embodied in many different forms and shall not be construed as being limited to the only embodiments presented herein as illustrative examples. It should be understood that there is no intention to limit the embodiments to the particular forms described in the remainder of this document.

In this disclosure, a method and system are proposed to automatically assess an environmental condition score of a geographical area based on satellite imagery.

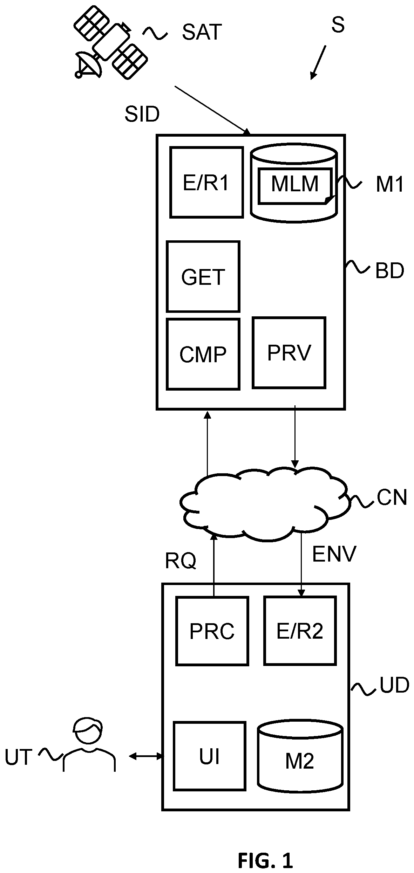

Figure 1 shows a system S for determining an environmental condition score comprising a computer device, or backend device BD, comprising a component GET to get image data SID of said geographical area, captured by a satellite, a computing component CMP configured to process the image data to determine values of the environmental condition score and a module PRV configured to provide the determined values to a user. The image data may be received from a distant data source or obtained from a local memory The computing component is configured to form a cell grid over across the image data, said cell grid comprising a plurality of cells, process the plurality of cells by selecting a cell from the plurality of cells, determining a value of a vegetation condition sub-score for said cell, determining a value of an infrastructure condition sub-score for said cell, and determining a value of the environmental condition score for said cell from at least the vegetation condition sub-score and the infrastructure condition sub-score.

In an embodiment, the computing component CMP is further configured to determine the infrastructure condition sub-score by:

- detecting one or more objects belonging to one or more given object classes in the cell based on spectrometric, RGB, data of a visible frequency band from pixel values of the cell and by using a trained machine learning model, MLM, and determining, for a detected object an object class among one or more given object classes and a confidence score associated with the detected object, and

- determining an object class score per object class, at least from the object classes of the detected objects and their confidence score, and

- deriving a value of the infrastructure condition sub-score for the cell by combining the object class scores of the one or more object classes.

In this embodiment, the MLM is for example stored in the memory M1 of the backend device. In a variant (not represented in Figure 1), the MLM may be stored in a remote memory to which the backend device BN is configured to access through communication means, for instance the emission/reception component E/R. In another embodiment (not represented in Figure 1), the backend device BD can also be implemented as a distributed architecture, for example in the cloud.

In the embodiment of Figure 1, the system S further comprises a user device UD, comprising an emission/reception component E/R2 configured to communicate with the backend device BD through a communication network CN, a processor PRC, a memory M2. and a user interface UI. The values of the environmental condition score are received from the backend device BD through the communication network CN, processed by the processor PRC and provided to a user UT through the human-machine interface UI. In the embodiment of Figure 1, the user device US has the hardware structure of a computer, with limited computing resources, particularly in terms of memory and CPU, such as for example a laptop, a smartphone or a tablet.

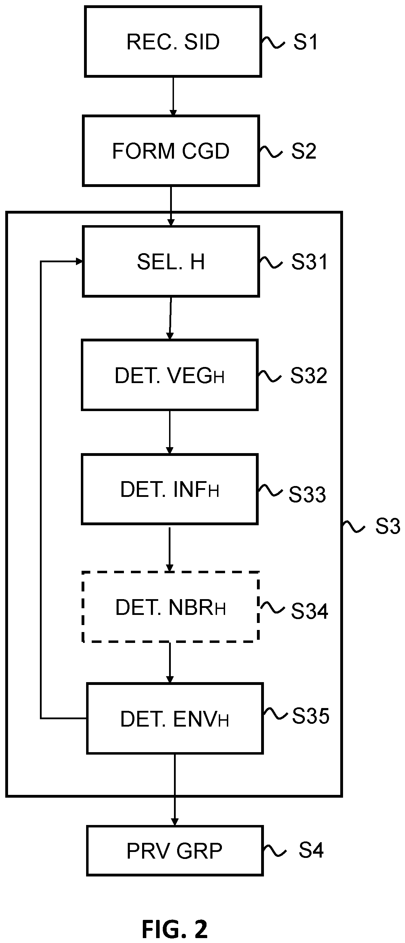

In an embodiment, the system S is configured to implement a method of determining an environmental condition score that will be further described in relation to Figure 2.

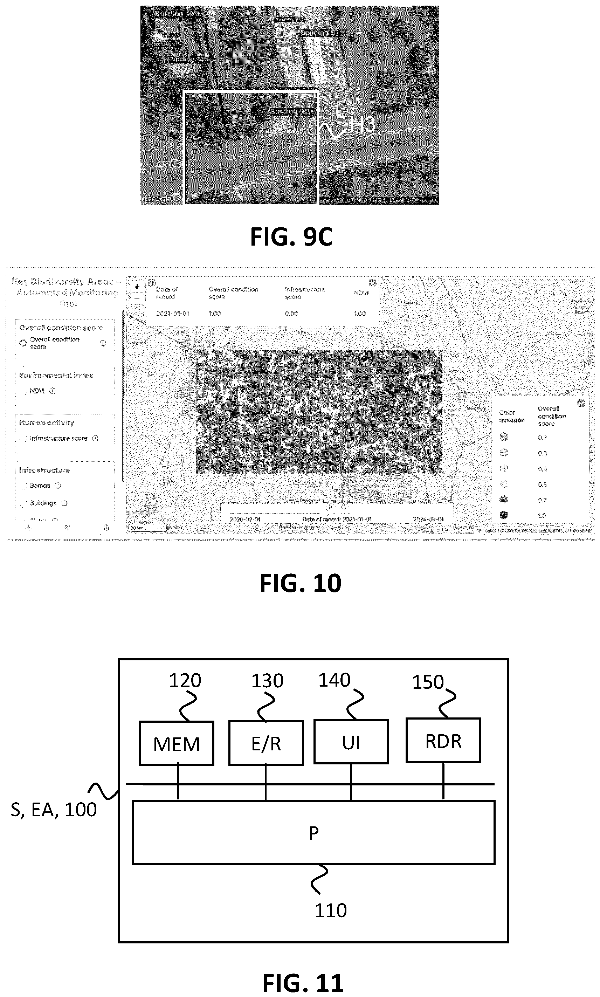

In a variant, the system S comprises an electronic apparatus configured to implement the functions of both the above backend device BD and user device UD. It may be a user terminal with sufficient computing resources, in particular to store and infer the MLM. An exemplary hardware structure of this system will be further described in relation to Figure 11.

The method of determining an environmental condition score of a geographical area will now be described in relation to Figure 2, according to an embodiment. It may be implemented by the system S of Figure 1 or by any above-mentioned variant of said system.

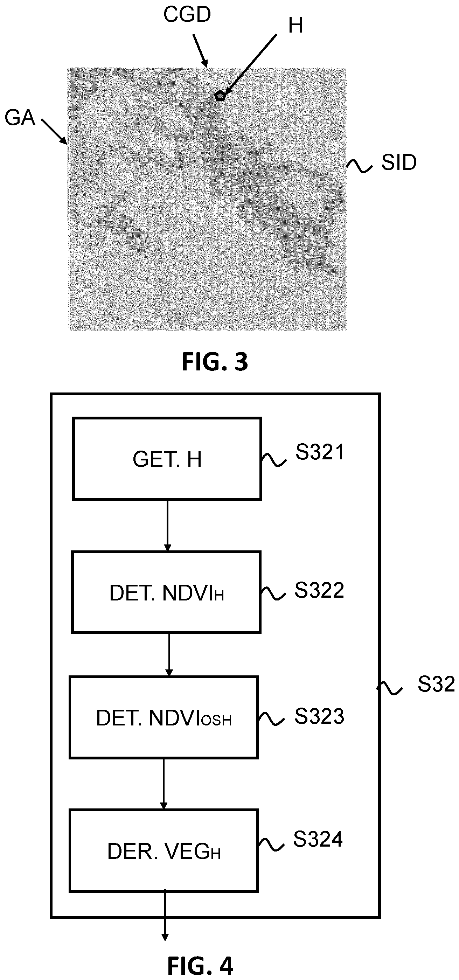

In a step S1, image data SID of a geographical area GA are obtained. They may comprise one or more pictures of said geographical area captured by satellite imagery, comprising at least one satellite. This may be one picture associated with a time stamp or a series of pictures captured during a given time period. In the following, we consider as an illustrative example, images from geographic areas from the Dakatcha Woodland and the Amboseli National Park in Kenya. Figure 3 shows an example of an input image of such a geographical area. The images are provided monthly by Planet.com, also known as Planet Labs, a private Earth imaging company that operates a large fleet of small satellites, which capture high-resolution images of the Earth's surface. Such an image of the Earth's surface is divided into quad tiles that are smaller, square sections for easier handling. They are pyramid-shaped, that is smaller tiles with more detail corresponding to higher zoom levels and larger tiles covering more area but with less detail. Corresponding to lower zoom levels are available. This structure allows for efficient delivery and rendering of imagery, as users can access only the specific tiles they need, rather than downloading large, unwieldy datasets. A specific quad tile is typically provided in the GeoTIFF format, a widely used file format for storing georeferenced raster imagery, in particular satellite images.

This format extends the traditional TIFF (Tagged Image File Format) by embedding geospatial metadata that allows the image to align with real-world coordinates and mapping systems. A GeoTIFF file stores raster data, which is a grid of pixels, with each pixel representing a portion of the image. Unlike standard TIFF files, a GeoTIFF file includes metadata that specifies the geographic location, projection, and coordinate system of the image. The GeoTIFF files provided by Planet.com generally store multiple bands in the same file as separate layers, where each band represents a specific portion of the electromagnetic spectrum (e.g., Blue, Green, Red, Near-Infrared). In the disclosure, the specific cell corresponding to the geographic area of interest is accessed at a level of resolution of approximately 3m/pixel. A typical dimension of the images is 4096x4096 pixel$^2$

A current image is the image received for the current month of the current year. Historical data comprises series of images, all associated with the same month, but with different years, for instance one time series would be September 2020, 2021, 2022, 2023 and 2024. Another would be October 2020, 2021, 2022, 2023, 2024. These time series are independent of each other. Otherwise, seasonal factors would introduce noise into a temporal comparison. In an embodiment, Planet Surface Reflectance basemaps are used (available at https://university.planet.com/page/nicfi-re sources, section "Product Specifications"), starting from September 2020. In a temporal series, each monthly image is spatially mapped exactly onto the image of the same month in any other year, as described in section 3.1. of the technical specs of Planet Basemaps for details on constant tiling grid that defines the geographical area covered by each image: Each geographical area has a unique identifier, consisting of x and y coordinates within a specific grid for a specific resolution or zoom level. In the following, the zoom level 15 is used.

In a step S2, another cell grid, for instance, a hexagonal grid is formed across the obtained image of the geographical area contained in the GeoTIFF file. In this way, a tessellation is produced, as illustrated by Fig. 2. With the zoom level of 15, the number of cells - here hexagons H- per image is typically around 15000 for a 100m circumradius. In the following, the grid cells are meant to be hexagons, but the method applies to any other form of grid cells, for instance quads or diamond shapes. In an embodiment, a software tool designed to manage and manipulate hexagonal grids is used, for example the Javascript Hex-Grid library, providing features like coordinate conversions, neighbor calculations, pathfinding, and visualization.

In a step S2, the plurality of hexagons H are processed to determine values of an environment condition score ENV. A value $ENV_H$ per hexagon is obtained.

In a step S3, the determined values of the environment condition score ENVT are provided to a user. In an embodiment, they are transmitted to a remote user device UD through a communication network CN as illustrated by Figure 1. In a variant, they are stored in a memory that is accessible to a user, for instance of the user device UD.

The step S3 of processing the plurality of cells of the image data SID will now be detailed.

In a sub-step S31, the hexagons of the geographical area GA of the input image are scanned, according to a scanning order to select a cell H to be processed. For instance, a zig-zag scanning order is used. A current hexagon H is chosen.

The following sub-steps S32 to S34 are applied to the current hexagon H.

In the sub-step S32, a value of a vegetation condition sub-score $VEG_H$ is determined for said hexagon H.

In the sub-step S33, a value of an infrastructure condition sub-score $INF_H$ is determined for hexagon H.

In the sub-step S35 a value of the overall environmental condition score $ENV_H$ is derived for hexagon H from at least the determined value of the vegetation condition sub-score $VEG_H$ and the determined value of the infrastructure condition sub-score $INF_H$.

Optionally, the step S3 further comprises a sub-step S34 comprising determining a value of a fire damage condition sub-score $NBR_H$ for the hexagon Hi.

The sub-steps S31 to S34 or S35 are repeated until all the hexagons of the geographical area GA are processed. As a result, the output of step S3 is a plurality of values of the environmental condition score $ENV_H$, one value of said plurality corresponding to one hexagon H of the plurality of hexagons formed across the image data SID of the geographical area GA.

Referring now to Figure 4, the sub-step S32 of determining a value of a vegetation condition sub-score $VEG_H$ is detailed according to an embodiment. In this sub-step, a specific sub-part of spectrometric data of the pixels of the hexagon H are used. In particular, this specific sub-part corresponds to data of a red frequency band and a near infrared frequency band from the pixel values of the image SID intersecting with the hexagon H. In a sub-step S321, this RED-NIR data sub-part is extracted from the Geo TIFF file.

In a sub-step S322, a current value of a metric for quantifying health and density of vegetation $NDVI_H$ is determined based on the RED-NIR data subpart. In an embodiment, this comprises determining a current value of said metric per pixel of the hexagon H and calculating a mean current value of said metric over the pixels of the hexagon H.

In an embodiment, calculation of a current value of the metric is performed for each pixel based on the following formula:

$$NDVI_P = (NIR - RED)/(NIR + RED) \quad \text{(Equation 1)}$$

$NDVI_P$ is the calculated NDVI value for one pixel of the hexagon Hi, *NIR* is the pixel value of band 4 (or NIR) from the image Geo TIFF-file, *RED* is the pixel value of band 3 (RED) from the image Geo TIFF-file.

The result is an array of $NDVI_P$ values within a range of -1 and +1. Values closer to +1 indicate a greater density of vegetation of higher level of "greenness", values closer to 0 indicates barren areas with little to no vegetation cover and values less than 0 are, by definition, water or non-vegetated features and are not used for further calculation.

The valid $NDVI_P$ values, that is the values with positive or null values are assigned to the current hexagon H. Then, all the $NDVI_P$ values for the hexagon H are averaged and the result is the current measured NDVI value for that hexagon, $NDVI_H$.

Calculation of an expected $NDVI_{HE}$ value for the hexagon H is further performed as the mean value of all NDVI values from historical images obtained at the same/current month of previous years.

$$NDVI_{HE} = \frac{\sum_j^N x_j}{n} \qquad \text{(Equation 2)}$$

Where n is the number of years for which measured $NDVI_H$ of this month are available in the historical data - xj is the j-th $NDVI_T$ value of the jth year of the n years of historic measured $NDVI_H$ values. It is noteworthy that the current year would be year number n+1.

In a sub-step S323, a vegetation outlier sub-score $VOS_H$ is determined by comparing the current measured $NDVI_H$ value of the metric with the expected value $NDVI_{HE}$ of the metric calculated above for the hexagon H.

In an embodiment, this is a scoring value which is calculated by comparing the current measured $NDVI_H$ value with the expected $NDVI_{HE}$ value obtained from the historical values. A strong deviation from the historical values is then referred to as an outlier. An outlier is an observation that lies abnormally far away from other values in a dataset.

The output range of the vegetation outlier sub-score $VOS_H$ is in the interval from 0 to 1 inclusive. Zero means that there is no outlier, and the current measured value $NDVI_T$ is in the range of the historical values. A value of 1 means that this is an outlier.

In an embodiment, the vegetation outlier sub-score $VOS_H$ is based on the calculation of a variance and a z-score.

The variance of the NDVI values for the hexagon H is determined as follows:

$$NDVI_{Var} = \frac{\sum_i^n (x_i - NDVI_{HE})^2}{n} \qquad \text{(Equation 3)}$$

This corresponds to a mean variation of the historical values of $NDVI_{HE}$ over the n years for a same month.

$$NDVI_{VAR} = \frac{NDVI_H - NDVI_{TE}}{\sqrt{NDVI_{VAR}}} \qquad \text{(Equation 4)}$$

Then a z-score is calculated as follows:

$$z - score = \frac{NDVI_H - NDVI_{HE}}{\sqrt{NDVI_{Var}}} \qquad \text{(Equation 5)}$$

The z-score allows to identify outliers by measuring how many standard deviations a single observation or data point is away from the mean of the distribution.

Then, the vegetation outlier score $NDVI_{OSH}$ is determined by scaling the z-score by a continuous function (sigmoid) so as to get values between 0 (no outlier) and 1(certain outlier).as follows:

$$NDVI_{OSH} = \frac{1}{1 + e^{-k(|z-score| - z_0)}} \qquad \text{(Equation 6)}$$

Where $z_0$ is a threshold defined is such a way that if z-score = $z_0$, then the outlier score $NDVI_{OSH}$ is 0.5 (which corresponds to the middle of the interval of possible values). $k$ is the slope of the sigmoid function. The greater the value the faster the outlier score $NDVI_{OSH}$ value is reaching the limits of the definition interval [0,1].

The outlier score $NDVI_{OSH}$ informs about an unexpected deviation of the $NDVI_H$ with respect to historical values in the considered hexagon H.

In a sub-step S324, the vegetation condition sub-score $VEG_H$ for the hexagon H is derived from the vegetation outlier sub-score $NDVI_{OSH}$.

In an embodiment, the sub-step S34 of determining a fire damage condition sub-factor $NBR_H$ for the hexagon comprises calculating of a current value of a metric for each pixel within the hexagon based on the following formula:

$$\mathrm{NBR_P}= (NIR-\mathrm{SWIR})/(NIR+\mathrm{SWIR}) \qquad \text{(Equation 7)}$$

$N$BR$_P$ is the calculated NBR value for one pixel of the hexagon, $NIR$ is the pixel value of band 4 (or NIR), SWIR is the pixel value of Shortwave Infrared band from the Geo TIFF file. In an embodiment, the image data SID may not include a SWIR band therefore the SWIR band data may be obtained from a different satellite. For instance, the Geo TIFF files provided by Planet.com do not include this type of data, but they may be obtained from another satellite imagery, for example image data provided by Sentinell-2 or Landsat-8 satellite for the same geographical area.

In an embodiment, an approach similar to the one described above for the NDVI$_{OSH}$ value may be followed. Indeed, in the same way, a variance NBR$_{Var}$ is obtained from historical data from the measured NBR value NBR$_P$ at each pixel of the hexagon H and an expected value NBR$_{HE}$ derived from historical images obtained at the same/current month of previous years. Then a NBR z-score is calculated, like for the NDVI and used, along with the variance NBR$_{Var}$ to derive the NBR outlier score NBR$_{OSH}$ for the hexagon.

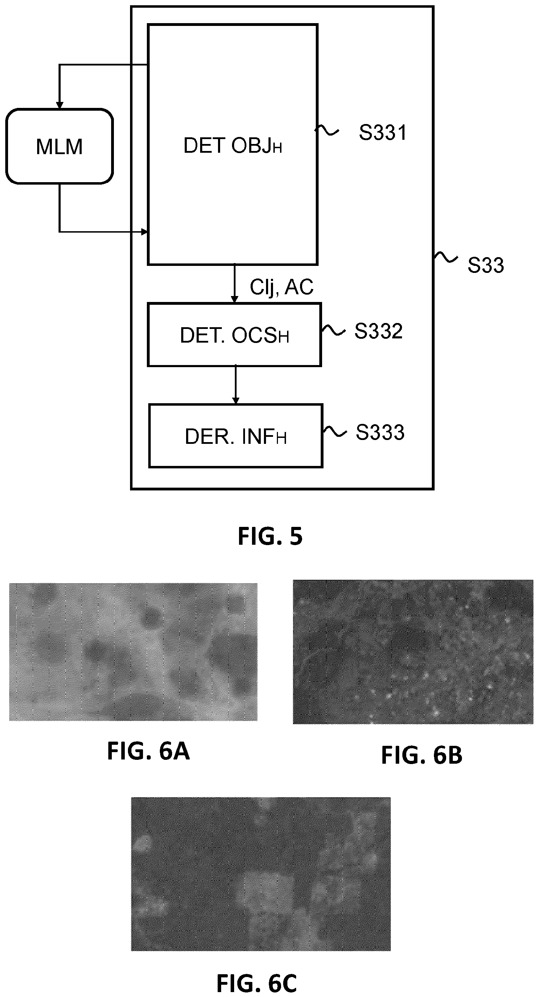

Referring now to Figure 5, the sub-step S33 of determining a value of an infrastructure condition sub-score INF$_H$ for the current hexagon H is detailed according to an embodiment. In this sub-step, another sub-part of spectrometric data of the image data is used. In particular, this sub-part corresponds to data of a visible frequency band from pixel values, typically Red Green Blue, or RGB data. In an embodiment, the geo TIFF images are beforehand converted into another common image format, for instance the PNG (Portable Network Graphics) format, compatible with requirements regarding input data format of a machine learning model MLM, that is used in the sub-step S33. For example, the Detectron2 model that will be described hereinafter, cannot read Geo TIFF format data.

In a sub-step S231, one or more objects belonging to one or more given object classes are detected in the hexagon H based on the RGB data of the pixels from the Geo TIFF file included into the hexagon H, and by using a trained machine learning model, MLM. The trained MLM takes the RGB data of the pixels of the hexagon as input and provides as output information regarding one or more objects detected in the hexagon H. This information comprises, for one detected object, an object class of said object among one or more given object classes and a confidence score associated with the detected object.

The one or more object classes comprises a limited number of classes of interest for the considered geographical area. For instance, when the geographic area corresponds to a National Park in Kenya, such as the Amboseli National Park or the Dakatcha Woodland, the selected object classes may include livestock enclosures called bomas, buildings, fields. In another embodiment, the object class 'fence' could also be added to the pool of object classes.

Figure 6A is an exemplary raw image of a geographical area from the Amboseli National Park showing a cluster of livestock enclosures, or bomas. These bomas appear as dark circles on the image. They are very frequent in the Amboseli National Park, but uncommon in the Dakatcha Woodland.

Figure 6B is another exemplary raw image of a geographical area from the Amboseli National Park showing a small town in Amboseli. The dots correspond to individual buildings.

Figure 6C is another exemplary raw image of a geographical area from the Dakatcha Woodland showing fields. They correspond to lighter rectangles standing for any human-made clearings that are mainly used for agricultural purposes.

In an embodiment, the machine learning model MLM is convolutional neural network architecture specialized for feature extraction such as ResNet or ResNeXt. In an embodiment, the object detection is carried out by Detectron2, a PyTorch-based modular framework for computer vision tasks like object detection and segmentation. This framework may be used for training and inference.

In an embodiment, the MLM has been specially trained to the specific task of detecting objects in image data from satellite imagery of geographic areas of national parks of Kenya. The training dataset comprises labelled images that are representative of the areas on which the object detection should be done. These labelled images are images of these geographical areas that have associated labels that are human-made segmentations of the object outlines and the object class.

In an embodiment, the MLM was trained on 40 labelled images on which around 4000 objects were labelled. These objects were mainly buildings.

The machine learning model is trained iteratively on the labelled images forming a training dataset, which is divided into multiple batches, by backpropagating an error calculated based on a loss function from the predictions compared to the labels and adjusting the weights of the MLM, continuing this process until a stopping criterion, such as a maximum error threshold or a minimum performance level, is met.

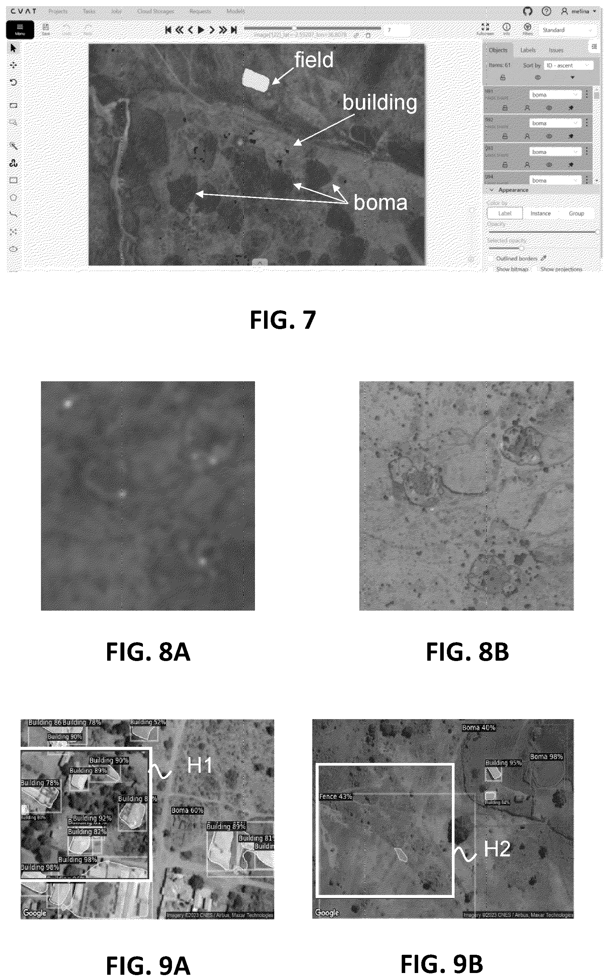

In an embodiment, a specific tool, called CVAT was used for carrying out the labelling. Referring to Figure 7, a snapshot shows how a labelled image of the geographical area looks like in CVAT. Marked as a light color is a field, middle light colors are bomas and little dark spots are buildings. This kind of tools helps providing accurate labelling which is essential for a well-trained model and makes a real difference when the objects are difficult to spot.

Because of the 3m/pixel resolution of the image data, it may happen to be difficult to accurately detect the objects by eye, but easier with higher resolution images of the same geographical area. In an embodiment, higher resolution images of the geographical areas from other sources are used to cross-check the human made segmentations of the objects are correct on the Planet.com images. This may be done by extracting the exact coordinates of the geographic area from the Planet.com TIF images and displaying the corresponding area on higher resolution images. For instance, the website GeoJSON.io provides a satellite imagery basemap option, allowing users to view and trace geographic features directly on satellite images. This functionality is particularly useful for tracing features visible in the imagery. For instance, a GEOJSON file of the extracted exact coordinates is generated from the geo TIFF image and the corresponding geographical area is displayer on the GeoJSON.io website.

Figure 8A shows blurred objects on a Planet.com image. Figure 8B shows a higher resolution image of the same geographical area available on the GeoJSON.io website, on which the objects can be made out much easier which may help provide a more accurate handmade segmentation.

Referring back to Figure 5, in a sub-step S332, an object class score $OCS_H$ is determined per object class Cj, based at least on the detected objects in this object class and their associated confidence score or accuracy AC.

In a sub-step S233, a value of the infrastructure condition sub-score $INF_H$ is determined for the hexagon by combining the determined object class scores. A value of the infrastructure condition sub-score for the geographical area GA is derived from the plurality of values of $INF_H$ obtained for the plurality of hexagons covering the geographical area. This infrastructure condition sub-score $INF_H$ is aimed at measuring the human made infrastructure in the geographical area by converting the number of objects and their confidence score in an area into a score ranging between 0 and 1. Zero means there is no detectable human-made infrastructure, and one means there is some kind of hotspot where the human footprint is highly visible. In particular, one should mean that a lot of objects are detected, for example if a town is detected or a boma hotspot with buildings around is found to detect changes, monthly object detections may be done.

The object class score $OCS_j$ for each object class Cj in sub-step S232 may be calculated in various ways, but the inventors experimented that the chosen technique may in fine impact the value of the infrastructure condition sub-score $INF_H$. Several techniques are described below and exemplified in relation to Figure 9A to 9D.

1) <u>Minimal Threshold:</u>

In an embodiment, a minimal threshold is chosen for the confidence score AC, also called accuracy score, associated with the object class Cj of a detected object. For example, the minimal threshold is set to 50% and only the objects having an accuracy above this threshold are taken into account in the object class score of the current hexagon H. Then the infrastructure condition sub-score $INF_H$ is calculated as a sum of the object class scores divided by the number of object classes:

$$INF_H = \frac{\sum_j^{Nc} OCS_j}{N_c} \qquad \text{(Equation 8)}$$

where $OCS_j$ is the accuracy score for object class Cj and Nc the total number of object classes.

An advantage of this solution is that it is very simple. However, the $OCS_j$ for each class Cj is 1, whether one object above 50% or one hundred objects above 50% were detected. Also, the $INF_T$ is 0 if one or more objects with an accuracy below 50% are detected. Furthermore, the calculation of the overall score is flawed, as it is only 1 when objects of all classes are detected with an accuracy above 50%. The score 1/3 is maybe representative if only one building was detected, however, if it was more, the score is expected to be higher.

2) <u>Minimal Threshold and maximal value:</u>

In another embodiment, the OCS is unchanged, but the overall infrastructure score is calculated differently. With the formula of Table 2, the $INF_H$ always gets 1 as result if at least one of the object classes has the score 1.

$$INF_H = 1 - \prod_1^{Nc}(1 - OCSj) \qquad \text{(Equation 9)}$$

This calculation of the infrastructure score is better, because high object score values are not cancelled out when the other scores are 0.3) <u>Mean accuracy:</u>

In yet another embodiment, all accuracies of all objects of each class in the hexagon H are added up and divided by the object quantity. For this solution the infrastructure condition sub-score formula makes more sense than for the previous ones.

$$OCS_j = \frac{\sum_k^K \mu_k}{N_c} \quad \text{(Equation 10)}$$

where K is the number of detected objects with object class Ci and $\mu_k$ is the accuracy score of object k.

The infrastructure condition sub-score $INF_H$ is calculated in the same way as the previous technique. An advantage is that the results obtained with this solution are more meaningful and granular than the ones obtained with the aforementioned techniques. However, if there are 30 detected buildings where each building has an accuracy below 50%, the overall OCSj for the building class would also be below 0.5.

4) Mean accuracy with quantity threshold

A quantity threshold is applied to the formula of OCSj of the previous technique. Every time, the quantity K of objects exceeds the threshold, the value of OCSj for the object class Cj is set to 1. Then the infrastructure sub-score is calculated in the same way as in 3). One example value would be for example 5, that is if more than 5 objects are detected, the score becomes one. However, a relevant quantity threshold strongly depends on the specific content of the hexagon area and is really difficult to set for all the hexagons.

In another embodiment, each segmented object is included into a polygon and the OCS of a class is calculated based on a ratio of the object polygon size to the hexagon size is calculated. For instance, such a calculation is based on an area of the object that is included inside the hexagon and a ratio of the object area to the hexagon area is obtained and mapped to a score.

Thus, the higher the ratio the higher the OCSj and the $INF_H$. An advantage is to take into account the ratio of space occupied by humanmade infrastructure in the geographical area. However, this may not be relevant, because the area of an object may not be linked to its environmental impact. For example, a fence often has more impact on the environment than a boma while the boma usually has a much bigger marked polygon area.

In another embodiment, a quantity threshold is applied, that is the OCS of an object class is set to 1 when the object count for this class exceeds a specific threshold. Then, the $INF_H$ is calculated in the same way as in previous techniques 2) to 4).

Mean accuracy with quantity added to the formula

In yet another embodiment, the determination of the object class score OCS is also based on a count of detected objects with an object class and their associated confidence or accuracy score AC. An advantage is that a quantity of detected objects is taken into account in the calculation of the object class score.

For example, the object class score is determined based on the following formula:

$$OCSj = Min\{1, \mu_j . \ln(1 + n)\} \quad \text{(Equation 11)}$$

OCSj is the object class score for object class Cj, with integer between 1 and the number of classes, n the count of detected objects associated with the object class Cj, $\mu_j$ an average accuracy for the detected objects associated with the object class Cj and ln the natural logarithm function.

The Min{..} means that the minimum of both values is taken. So, if the multiplication on the right side exceeds 1, the value 1 is taken. The logarithm is only zero when n is zero. If n is 1 the result of the logarithm would be below 1 (~0.7), if n is 2 the result would be approximately 1, if n is bigger the result would be bigger than 1 but increasing only slowly.

Experimental results

In this section, four exemplary input hexagons are evaluated with the five methods mentioned above. In this example, the input hexagons are extracted from Google Earth images, which are presented in Figures 9A to 9C. Each hexagon is represented by a white square.

Example 1:

Fig. 9A presents a hexagon H1 having multiple objects (K = 12 buildings) of the same class.

1) Minimal threshold (50%) divided by the number of classes:

Table 1

| Boma Probability (pBoma) | 0 |
|---|---|
| Building Probability (pBuilding) | 1 |
| Fence Probability (pFence) | 0 |
| Overall Infrastructure Score ($INF_H$) | 1/3 |

2) Minimal threshold (50%) and maximal value:

Table 2

| Boma Probability (pBoma) | 0 |
|---|---|
| Building Probability (pBuilding) | 1 |
| Fence Probability (pFence) | 0 |
| Overall Infrastructure Score ($INF_H$) | 1-((1-pBoma) * (1-pBuilding) * (1-pFence)) = 1 |

3) Mean accuracy:

Table 3

| Boma Probability (pBoma) | 0 |
|---|---|
| Building Probability (pBuilding) | (0.9*2+0.87+0.89+0.8+0.78+0.92+0.82*2+0.98*2 +0.96)/12=0.885 |
| Fence Probability (pFence) | 0 |
| Overall Infrastructure Score ($INF_H$) | 1-((1-pBoma) * (1-pBuilding) * (1-pFence)) = 0.885 |

4) Mean accuracy with quantity threshold

Table 4

| Boma Probability (pBoma) | 0 |
|---|---|
| Building Probability (pBuilding) | 1 |
| Fence Probability (pFence) | 0 |
| Overall Infrastructure Score ($INF_H$) | 1-((1-pBoma) * (1-pBuilding) * (1-pFence)) = 1 |

5) Mean accuracy with quantity added to the formula:

Table 5

| Boma Probability (pBoma) | 0 |
|---|---|
| Building Probability (pBuilding) | (0.9*2+0.87+0.89+0.8+0.78+0.92+0.82*2+0.98*2 +0.96)/12*ln(1+12) $\approx$ 0.885 * 2.56 > 1 $\rightarrow$ = 1 |
| Fence Probability (pFence) | 0 |
| Overall Infrastructure Score ($INF_H$) | 1-((1-pBoma) * (1-pBuilding) * (1-pFence)) = 1 |

Evaluation:

A score of 1 or close to 1 should be expected for this example as the hexagon H1 covers a part of a village. So, the score of 1) is very misrepresentative. Also, the score of 3) could be higher. The others are correct.

Example 2:

Figure 9B represents an hexagonH2 with one object with a low accuracy score.

1) Minimal threshold (50%) divided by the number of classes:

Table 6

| | |
|---|---|
| Boma Probability (pBoma) | 0 |
| Building Probability (pBuilding) | 0 |
| Fence Probability (pFence) | 0 |
| Overall Infrastructure Score ($INF_H$) | 0 |

2) Minimal threshold (50%):

Table 7

| | |
|---|---|
| Boma Probability (pBoma) | 0 |
| Building Probability (pBuilding) | 0 |
| Fence Probability (pFence) | 0 |
| Overall Infrastructure Score ($INF_H$) | 1-((1-pBoma) * (1-pBuilding) * (1-pFence)) = 0 |

3) Mean accuracy:

Table 8

| | |
|---|---|
| Boma Probability (pBoma) | 0 |
| Building Probability (pBuilding) | 0 |
| Fence Probability (pFence) | 0.43 |
| Overall Infrastructure Score ($INF_H$) | 1-((1-pBoma) * (1-pBuilding) * (1-pFence)) = 0.43 |

4) Mean accuracy with quantity threshold (5):

Table 9

| | |
|---|---|
| Boma Probability (pBoma) | 0 |
| Building Probability (pBuilding) | 0 |
| Fence Probability (pFence) | 0.43 |
| Overall Infrastructure Score ($INF_H$) | 1-((1-pBoma) * (1-pBuilding) * (1-pFence)) = 0.43 |

5) Mean accuracy with quantity added to the formula:

Table 10

| Boma Probability (pBoma) | 0 |
|---|---|
| Building Probability (pBuilding) | 0 |
| Fence Probability (pFence) | $0.43 * \ln(2) \approx 0.43 * 0.7 \approx 0.3$ |
| Overall Infrastructure Score ($INF_H$) | 1-((1-pBoma) * (1-pBuilding) * (1-pFence)) = 0.3 |

Evaluation:

As there is only one object with an accuracy of 43%, the result should vary between 0.1-0.43. The results of 1) and 2) are clearly misrepresentative as the score 0 should only be the result for this hexagon which does not include any infrastructure at all. The results of 3) and 4) are evaluated as correct but could be a little bit lower considering that it is only one single object. The score of 5) is assessed as the best result because it is below the accuracy of the object detection.

Example 3:

Figure 9C shows an hexagon H3 with one object with a high accuracy score.
1) Minimal threshold (50%) divided by the number of classes:

Table 11

| Boma Probability (pBoma) | 0 |
|---|---|
| Building Probability (pBuilding) | 1 |
| Fence Probability (pFence) | 0 |
| Overall Infrastructure Score ($INF_H$) | 1/3 |

Minimal threshold (50%):

Table 12

| Boma Probability (pBoma) | 0 |
|---|---|
| Building Probability (pBuilding) | 1 |
| Fence Probability (pFence) | 0 |
| Overall Infrastructure Score ($INF_H$) | 1-((1-pBoma) * (1-pBuilding) * (1-pFence)) = 1 |

Mean accuracy:

Table 13

| Boma Probability (pBoma) | 0 |
|---|---|
| Building Probability (pBuilding) | 0.91 |
| Fence Probability (pFence) | 0 |
| Overall Infrastructure Score ($INF_H$) | 1-((1-pBoma) * (1-pBuilding) * (1-pFence)) = 0.91 |

Mean accuracy with quantity threshold (5):

Table 14

| Boma Probability (pBoma) | [154] 0 |
|---|---|
| Building Probability (pBuilding) | 0 |
| Fence Probability (pFence) | 0.91 |
| Overall Infrastructure Score ($INF_H$) | 1-((1-pBoma) * (1-pBuilding) * (1-pFence)) = 0.91 |

Mean accuracy with quantity added to the formula:

Table 15

| Boma Probability (pBoma) | 0 |
|---|---|
| Building Probability (pBuilding) | 0.91 * ln(2) ≈ 0.91 * 0.7 ≈ 0.64 |
| Fence Probability (pFence) | 0 |
| Overall Infrastructure Score ($INF_H$) | 1-((1-pBoma) * (1-pBuilding) * (1-pFence)) = 0.64 |

Evaluation:

For this scenario a result around 0.5 would be expected, as there is only one building in the hexagon, but with a high accuracy. Therefore, the results from techniques 1), 2) and 3) are not sufficient. The score from technique 4) is too high for only one building. The result from technique 5) turns out to be the best result. It confirms that the use of natural logarithm works well for the score as it lowers the high accuracy value since there is only one object.

In an embodiment, different weights may be applied to the different object class score to prioritize one or more classes with respect to the others. Their values may be fixed by experts of the domain.

The determination of the overall environment condition score $ENV_H$ based on the aforementioned vegetation $VEG_H$, infrastructure $INF_H$ and optionally fire damage condition $NBR_H$ sub-scores will now be described in more details, according to an embodiment.

In an embodiment, the following requirements are considered to in order to get an overall environment condition score $ENV_H$ accepted as an acceptable and trustworthy score:

- Req. 1: $ENV_H$ is a compound index which will be calculated by the usage of sub-indices which are thematically group variables.

- Req 2: Only the vegetation, infrastructure and optionally fire damage condition sub-scores (with values ranging in [0: 1]) are permitted for the calculation of $ENV_H$.

- Req. 3: a weighting of the sub-scores can be done (if so, then the sum of all weights have to be 100% or 1).

- Req. 4: $ENV_H$ is a value in the range of 0 to 1.

- Req. 5: If all sub-scores are 0, $ENV_H$ must have a value of 0.

  Req. 6: If all sub-scores are 1, $ENV_H$ must have a value of 1.

  Req. 7: High values of one sub-score must not be canceled out by low values of another sub-score.

In the embodiment, the environment condition score $ENV_H$ is a based on a softmax function as follows:

$$ENV_H = \frac{\left(Max\left(ln\left(1+e^{v^{1-w}}\right)\right) - \ln(2)\right)}{0.62} \qquad \text{(Equation 12)}$$

v is an input vector formed with the values of the aforementioned sub-score values for the current hexagon, w are the weights of each sub-score where the sum of all weights shall be 1, ln() is the natural logarithm.

ln(2) and 0.62 are used to translate the result into the correct range of [0:1].

Including weights w in the calculation is optional and intended to reflect a prioritization of the sub-scores. The weighting should therefore be done by an expert who knows the different scores and can quantify the relationship between them.

The values of overall environment condition score $ENV_H$ for the plurality of hexagons of the geographical area GA are provided to a user in S3. In an embodiment, the user device UD is configured to display a graphical representation GRP of the overall environment condition score values for the plurality of hexagons as a color or heat map of the cell grid of the geographical area. In an embodiment of the step S3, the user is invited to select the overall environment condition score ENVH or any aforementioned sub-score $VEG_H$, $INF_H$, $NBR_H$ they want to be displayed and can switch from one to the other, as shown in Figures 10A showing the $NDVI_H$ values and 10B showing the environment condition score $ENV_H$.

Each function, block, step described may be implemented in hardware, software, firmware, middleware, microcode or any suitable combination thereof. If they are implemented in software, the functions or blocks of the block diagrams and flowcharts can be implemented by computer program instructions/software codes, which can be stored or transmitted on a computer-readable medium, or loaded onto a general-purpose computer, special-purpose computer or other programmable processing device and/or system, so that the computer program instructions or software codes running on the computer or other programmable processing device create the means to implement the functions described in the present description.

Figure 11 shows an example of the hardware structure of a system S for determining an environmental condition score of a geographical area, according to one embodiment. In this example, the system S is integrated into an electronic apparatus EA, 100 which is configured to implement all the steps of the method disclosed in the present document. Alternatively, it could also implement only some of these steps.

In relation to figure 11, the electronic apparatus EA, 100 comprises at least one processor 110 and at least one memory 120. The electronic apparatus EA may also comprise one or more communication interfaces. In this example, the electronic apparatus EA, 100 comprises network interfaces 130 (for example, network interfaces for wired/wireless network access, including an Ethernet interface, a WIFI interface, etc.) connected to the processor 110 and configured to communicate via one or more wired/wireless communication links and user interfaces 140 (for example, a keyboard, a mouse, a display screen, etc.) connected to the processor. The device 100 may also comprise one or more media players 150 for reading a computer-readable storage medium (for example, a digital storage disk (CD-ROM, DVD, Blue Ray, etc.), a USB stick, etc.). The processor 110 is connected to each of the other aforementioned components in order to control the operation thereof.

The memory 120 may comprise a random-access memory (RAM), cache memory, nonvolatile memory, backup memory (for example, programmable or flash memories), read-only memory (ROM), a hard disk drive (HDD), a solid-state drive (SSD) or any combination thereof. The ROM of the memory 120 can be configured to store, inter alia, an operating system of the electronic apparatus EA, 100 and/or one or more computer program codes of one or more software applications. The RAM of the memory 120 can be used by the processor 110 for temporary data storage.

The processor 110 can be configured to store, read, load, execute and/or else process instructions stored in a computer-readable storage medium and/or in the memory 120 so that, when the instructions are executed by the processor, the device 100 performs one or more or all of the steps of the management method disclosed herein. Means implementing a function or set of functions may correspond in this document to a software component, a hardware component or even a combination of hardware and/or software components, capable of implementing the function or set of functions, as described below for the means related.

The present description also relates to an information storage medium readable by a data processor, and comprising instructions of a program as mentioned above. The information storage medium can be any hardware means, entity or apparatus, capable of storing the instructions of a program as mentioned above. Usable program storage media include ROM or RAM, magnetic storage media such as magnetic disks and tapes, hard disks or optically readable digital data storage media, or any combination thereof.

In some cases, the computer-readable storage medium is non-transitory. In other cases, the information storage medium may be a transient medium (for example, a carrier wave) for transmitting a signal (electromagnetic, electrical, radio or optical signal) containing program instructions. This signal can be routed via a suitable wired or wireless transmission means: electrical or optical cable, radio or infrared link, or by other means.

One embodiment also relates to a computer program product comprising a computer-readable storage medium on which program instructions are stored, the program instructions being configured to cause the host device (for example a computer) to implement some or all of the steps of the method disclosed herein when the program instructions are executed by one or more processors and/or one or more programmable hardware components of the host device.

The aforementioned system and method enable the automatic determination of an overall environmental condition score for a geographical area as a single metric. This overall environment condition score is made up of different sub-scores related to vegetation, infrastructure and optionally fire damage. It thus reflects an artificialization rate of the geographical area at a given time and follows dynamically its artificialization rate over time. It may help organizations to measure progress over a goal and may facilitate decision making.

**Claims**

1. A computer implemented method of determining an environmental condition score ($ENV_H$) of a geographical area (GA), including the following steps, performed by a computer system (S):

    - obtaining (S1) image data (SID) of said geographical area, from satellite imagery (SAT) for at least one time period,
    - forming (S2) a cell grid across said image data of the geographical area, said cell grid comprising a plurality of cells (H);
    - processing (S3) the plurality of cells (H), comprising, for one cell of said plurality of cells:

        - determining (S32) a value of a vegetation condition sub-score ($VEG_H$) for said cell;
        - determining (S33) a value of an infrastructure condition sub-score ($INF_H$) for said cell; and
        - deriving (S35) a value of the environmental condition score ($ENV_H$) for said cell at said time period from at least the vegetation condition sub-score and the infrastructure condition sub-score, and

    - providing (S4) the values of at least the environmental condition score ($ENV_H$) for the plurality of cells corresponding to the given time period to a user through a human-machine interface (UI) of the computer system (S).

2. The method according to claim 1, wherein the step of determining an infrastructure condition sub-score includes the steps of:

    - detecting (S331) one or more objects belonging to one or more given object classes in the cell (H) based on spectrometric, RGB, data of a visible frequency band of pixels included in the cell (H) and by using a trained machine learning model (MLM), and determining, for a detected object an object class among one or more given object classes and a confidence score associated with the detected object, and
    - determining (S332) an object class score ($OCSj$) per object class (Cj), at least from the object classes of the detected objects and their confidence score (AC), and
    - deriving (S333) a value of the infrastructure condition sub-score for the cell by combining the object class scores of the one or more object classes.

3. The method according to claim 1, wherein the determination of the object class score for the cell is also based on a count of detected objects associated with an object class.

4. The method according to anyone of claims 1 to 3, wherein the step of determining a value of a vegetation condition sub-score includes:

    - determining (S322) a measured value of a metric for quantifying health and density of vegetation ($NDVI_H$) from spectrometric data of a red frequency band and a near infrared frequency band from pixel values of the cell,
    - determining (S323) a vegetation outlier sub-score ($NDVI_{OSH}$) by comparing the measured value with an expected value of the metric calculated from the measured value and historical values of the metric associated with previous time periods, and

    wherein the vegetation condition sub-score ($VEG_H$) is derived from the vegetation outlier sub-score ($NDVI_{OSH}$).

5. The method according to anyone of claim 1 to 4, wherein the processing (S3) of the plurality of cells further comprises:

    - determining (S34) a value of a fire damage condition sub-score for said cell, comprising

- determining a measured value of a metric for quantifying fire damages ($NBR_P$) per pixel of the cell, as a ratio of spectrometric data of a near infrared frequency band and a short-wave infrared frequency band from pixel values of the cell,

- determining a fire damage outlier sub-score ($NBR_{OSH}$) by comparing the measured value ($NBR_P$) with an expected value of the metric ($NBR_{HE}$) for the cell calculated from the measured value and historical values of the metric associated with previous time periods,

wherein the fire damage condition sub-score ($NBR_H$) is derived from the fire damage outlier sub-score ($NBR_{OSH}$), and

wherein the value of the overall environmental condition score ($ENV_H$) for said cell is derived from the vegetation condition sub-score, the infrastructure condition sub-score, and the fire damage condition sub-score.

6. The method according to any of claims 2 to 5, wherein determining (S35) the environmental condition score ($ENV_H$) for the cell (H) comprises applying a softmax function to the determined sub-score comprising at least the determined vegetation condition and infrastructure condition sub-scores.

7. The method according to claim 6, wherein determining (S35) the environmental condition score ($ENV_H$) further comprises applying different weights to at least the vegetation and infrastructure condition sub-scores.

8. The method according to claim 2, wherein the machine learning model (MLM) is trained using a training database comprising a plurality of image data (SID) of the geographical area (GA) associated with labels, the labels of one of said image data including, for one cell the plurality of cells, an index of the cell, human-made segmentations of the objects to be detected in the cell and their associated object class.

9. The method according to claim 8, wherein the labels of one of said plurality of cells is cross-checked against higher resolution images of the geographic area.

10. A computer system (S) for determining an environmental condition score ($ENV_H$) of a geographical area (GA), said computer system comprising a computer device (BD) configured to:

- get image data (SID) of said geographical area, from satellite imagery (SAT) for at least one time period,
- forming (S2) a cell grid across said image data of the geographical area, said cell grid comprising a plurality of cells (H);
- process the plurality of cells, comprising, for one cell of said plurality of cells:

- determining a value of a vegetation condition sub-score ($VEG_H$) for said cell;
- determining (S23) a value of an infrastructure condition sub-score ($INF_H$) for said cell;
- deriving (S25) a value of the environmental condition score ($ENV_H$) for said cell from at least the vegetation condition sub-score and the infrastructure condition sub-score, and

said computer system comprising a human-machine interface (UI) configured to provide the values of the environmental condition score ($ENV_H$) for the plurality of cells corresponding to the given time period to a user.

11. The computer system (S) according to claim 11, wherein the computer device (BD) further comprises a memory (M1) configured to store a machine learning model (MLM) trained to detect objects belonging to one or more given object classes in the cells of the image data (SID) and, and wherein determining a value of an infrastructure condition sub-score ($INF_H$) for said cell includes:

- detecting one or more objects belonging to one or more given object classes in the cell (Hi) based on spectrometric, RGB, data of a visible frequency band from pixel values of the cell and by using a trained machine learning model, MLM, and determining, for a detected object an object class among one or more given object classes and a confidence score associated with the detected object, and
- determining an object class score ($OCSj$) per object class ($Cj$), at least from the object classes of the detected objects and their confidence score (AC), and
- deriving a value of the infrastructure condition sub-score for the cell by combining the object class scores of the one or more object classes.

12. The computer system (S) according to anyone of claims 10 and 11, further comprising a user device (UD) comprising the human-machine interface (UI) and configured to receive the values of the environmental condition score through a communication network (CN) and to provide a representation (GRP) of said environmental condition score to the user through the human machine interface.

13. The computer system (S) according to anyone of claims 10 and 11, comprising:

    - at least one processor; and
    - at least one memory including computer program code, the at least one memory and computer program code configured to, with the at least one processor, cause the computer apparatus to carry out the steps of the method of any of claims 1 to 9.

14. A computer program comprising program instructions stored thereon for causing a processor to perform a method according to any one of claims 1-9.

15. A non-transitory computer-readable medium comprising program instructions stored thereon for causing a computer to perform a method according to any one of claims 1-9.

**FIG. 1**

**FIG. 2**

**FIG. 3**

**FIG. 4**

**FIG. 5**

**FIG. 6A**

**FIG. 6B**

**FIG. 6C**

FIG. 7

FIG. 8A

FIG. 8B

FIG. 9A

FIG. 9B

FIG. 9C

FIG. 10

FIG. 11

Europäisches
Patentamt

European
Patent Office

Office européen
des brevets

# EUROPEAN SEARCH REPORT

**Application Number**

EP 24 30 7217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VARSHNEY AVNISH ET AL: "A Comparative Study of Built-up Index Approaches for Automated Extraction of Built-up Regions From Remote Sensing Data", JOURNAL OF THE INDIAN SOCIETY OF REMOTE SENSING, SPRINGER INDIA, INDIA, vol. 42, no. 3, 5 January 2014 (2014-01-05), pages 659-663, XP035377398, ISSN: 0255-660X, DOI: 10.1007/S12524-013-0333-9 [retrieved on 2014-01-05] | 1,10, 12-15 | INV. G06V20/13 G06V20/17 G06V20/10 |
| Y | * abstract * * figure 2 * | 2-4,6-9, 11 | |
| A | * page 660 - page 661 * | 5 | |
| | ----- | | |
| X | US 2021/209803 A1 (JHA SANJIV KUMAR [IN] ET AL) 8 July 2021 (2021-07-08) | 1,5,10, 12-15 | |
| Y | * figure 1 * * paragraphs [0001], [0031], [0078] - [0106], [0203] * | 2-4,6-9, 11 | |
| | ----- | | TECHNICAL FIELDS SEARCHED (IPC) |
| Y | JAVED IQBAL ET AL: "Weakly Supervised Domain Adaptation for Built-up Region Segmentation in Aerial and Satellite Imagery", ARXIV.ORG, CORNELL UNIVERSITY LIBRARY, 201 OLIN LIBRARY CORNELL UNIVERSITY ITHACA, NY 14853, 5 July 2020 (2020-07-05), XP081716338, * abstract * * page 7, lines 17-21 * | 2,3,6-9, 11 | G06V |
| | ----- | | |
| | -/-- | | |

The present search report has been drawn up for all claims

| Place of search | Date of completion of the search | Examiner |
|---|---|---|
| The Hague | 9 April 2025 | Philips, Petra |

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 30 7217

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | M Morad ET AL: "A Concise Introduction to Geographical Information Systems and Science Contents", , 13 February 2017 (2017-02-13), XP055646810, Retrieved from the Internet: URL:http://faculty.wwu.edu/patrick/geo250/Reading/gis_dictionary.pdf [retrieved on 2019-11-27] * page 7, line 4 * ----- | | |
| Y | MENG-LUNG LIN ET AL: "A GIS-based Local Spatial Autocorrelation for Drought Risk Assessment in Arid and Semi-Arid Environments: a Case Study in Ejin Oasis, Western China", PROCEEDINGS / 2008 IEEE INTERNATIONAL GEOSCIENCE & REMOTE SENSING SYMPOSIUM : JULY 6 - 11, 2008, JOHN B. HYNES VETERANS MEMORIAL CONVENTION CENTER, BOSTON, MASSACHUSETTS, U.S.A, IEEE, PISCATAWAY, NJ, 7 July 2008 (2008-07-07), pages IV-830, XP031422993, ISBN: 978-1-4244-2807-6 * section 3 * ----- | 4 | |

TECHNICAL FIELDS
SEARCHED        (IPC)

The present search report has been drawn up for all claims

| Place of search | Date of completion of the search | Examiner |
|---|---|---|
| The Hague | 9 April 2025 | Philips, Petra |

EPO FORM 1503 03.82 (P04C01)

## ANNEX TO THE EUROPEAN SEARCH REPORT
## ON EUROPEAN PATENT APPLICATION NO.

EP 24 30 7217

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | Publication date |
|---|---|---|---|
| US 2021209803 A1 | 08-07-2021 | NONE | |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VRIELING et al.** Identification of temporary livestock enclosures in Kenya from multi- temporal Planet-Scope Imagery. Elsevier, 2022